# DEMANDE DE BREVET EUROPEEN

(11) **EP 2 242 229 A1**
(43) Date de publication de la demande: **20.10.2010**
(21) Numéro de dépôt: 10159722.7
(22) Date de dépôt: 13.04.2010
(51) Int. Cl.: H04L 29/06, H04W 12/06

(54) **Procédé pour authentifier un terminal mobile client auprès d'un serveur distant**

(30) Priorité: 16.04.2009 FR 0901849
(71) Demandeur: Miyowa, 13002 Marseille (FR)
(72) Inventeur: Colon, François, 13013, MARSEILLE (FR)
(74) Mandataire: Bentz, Jean-Paul

(57) **Abrégé**

L'invention concerne un procédé et un dispositif pour authentifier un terminal mobile client (TM) auprès d'un serveur (S) distant dudit terminal, ledit serveur envoyant préalablement audit terminal mobile un défi (Def), ledit terminal mobile devant, pour s'authentifier, répondre au défi en transmettant une réponse (R) consistant à encoder ledit défi combiné à une clé secrète (Ki) connue à la fois dudit terminal et dudit serveur, se caractérisant par le fait que la clé secrète (Ki) est cachée par stéganographie dans un fichier média (MS) enregistré sur le terminal mobile (TM).

## Description

La présente invention a pour objet un procédé et un dispositif permettant d'authentifier de manière sécurisée un terminal mobile auprès d'un serveur distant dudit terminal. Elle a également pour objet un terminal mobile permettant la mise en oeuvre du procédé et/ou destiné à être utilisé dans le dispositif.

### DOMAINE TECHNIQUE DE L'INVENTION

L'invention concerne le domaine technique général des protocoles permettant de protéger l'authentification d'un terminal mobile client auprès d'un serveur faisant partie d'un réseau de communication. Elle concerne plus particulièrement les procédés et dispositifs permettant de vérifier l'identité d'un client par la technique dite du défi/réponse.

L'invention s'applique de façon préférée, mais non limitative, à l'authentification d'un client pour : l'ouverture d'une session de messagerie instantanée sur téléphone mobile, l'activation de fonctionnalités sur un terminal mobile, la transmission de données sur un réseau de communication sécurisée (faisant intervenir en particulier des cartes à puces), etc.

### ÉTAT DE LA TECHNIQUE ANTÉRIEURE

Les terminaux mobiles (tels que téléphones mobiles, ordinateurs portables, PDA, BlackBerry®) sont généralement équipés d'un certain nombre de fonctionnalités permettant, par exemple, de consulter des mails, d'ouvrir une session de messagerie instantanée, de communiquer sur un Blog, de transférer des données sécurisée, etc. Chacune de ces fonctionnalités est mise en oeuvre par une application informatique spécifique (ou logiciel) intégrée dans le terminal mobile.

Lorsqu'un utilisateur souhaite activer l'une de ces fonctionnalités, l'application informatique associée émet préalablement une requête d'authentification à destination du serveur qui délivrera les services correspondants à ladite fonctionnalité. Ce n'est qu'une fois que l'utilisateur aura été clairement identifié par le serveur, que ce dernier activera la fonctionnalité.

La technique d'authentification dite du défi/réponse est bien connue de l'homme du métier. Avant d'activer la fonctionnalité, le serveur envoie un défi au terminal mobile. Ce dernier doit alors transmettre une réponse à ce défi qui est seulement connue par le client et par le serveur. Ce n'est que si la réponse est bonne que le serveur authentifie le client et active la fonctionnalité.

Un exemple basique de cette technique du défi/réponse est l'identification par mot de passe : le serveur demande au client un mot de passe associé à un identifiant (c'est le défi) ; le client renvoie son mot de passe associé à son identifiant (c'est la réponse). Chaque mot de passe et chaque identifiant doit être stocké du côté du serveur. Si le mot de passe et l'identifiant concordent, alors le serveur active la fonctionnalité. L'inconvénient principal de cette technique d'identification triviale est qu'un fraudeur peut facilement intercepter le mot de passe et l'identifiant, et peut se faire passer illégalement pour le client.

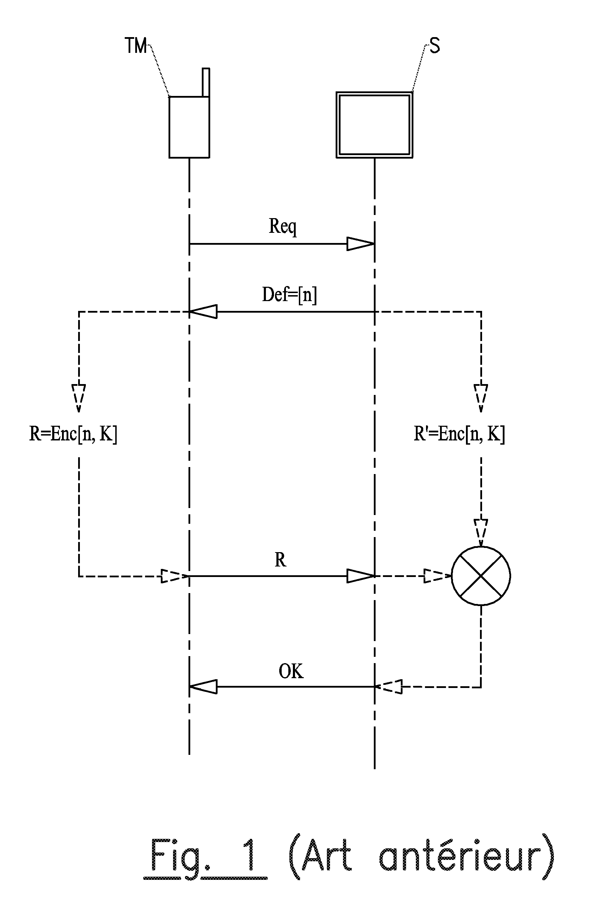

Une technique de défi/réponse plus complexe est connue sous la dénomination CRAM (pour l'anglais « Challenge Response Authentication Mechanism »). Le but de ce procédé CRAM est de prouver au serveur son identité sans jamais faire transiter son mot de passe ou son identifiant. En se rapportant à la figure 1, le procédé CRAM consiste à :
- envoyer une requête d'authentification Req, du terminal mobile TM vers le serveur S ;
- envoyer un défi Def comportant un nombre aléatoire n, du serveur S vers le terminal mobile TM ;
- générer au niveau du terminal mobile TM, une réponse R au défi Def consistant à encoder le nombre aléatoire n combiné avec une clé secrète K associée au client (R=Enc[n, K]). Cette clé secrète K est uniquement connue du serveur S et du terminal mobile TM, tandis que l'algorithme d'encodage peut être public ;
- générer au niveau du serveur S, une réponse type R' consistant à encoder le nombre aléatoire n combiné à la clé secrète K associée au client (R'=Enc[n,K]) ;
- envoyer la réponse R, du terminal mobile TM vers le serveur S ;
- comparer, au niveau du serveur S, la réponse R du client avec la réponse type R' ;
- si R=R' alors le serveur S authentifie le client et active la fonctionnalité.

Ce procédé CRAM est particulièrement avantageux, car même si un fraudeur intercepte la réponse R et qu'il connaît l'algorithme d'encodage, il ne pourra pas retrouver la clé secrète K, car il ne connaîtra pas la valeur du nombre aléatoire n. De même, si un fraudeur intercepte le défi Def et donc prend connaissance de la valeur du nombre aléatoire n, il ne pourra pas établir de réponse, car il ne connaîtra pas la valeur de la clé secrète K.

existe toutefois une limite à l'efficacité de ce procédé CRAM lorsque le terminal mobile client est dérobé. En effet, il devient dans ce cas aisé de retrouver la clé secrète dans les ressources de l'application. De plus, l'ensemble des clés secrètes associées aux clients doit être stocké côté serveur. Donc, si le serveur est piraté, toutes les clés secrètes peuvent être découvertes. Dans un cas comme dans l'autre, la connaissance des clés secrètes est évidemment hautement préjudiciable, car un fraudeur peut alors facilement se faire passer pour un client.

D'autres techniques de défi/réponse sont également décrites dans les documents brevet WO 2006/084183 (QUALCOMM), US 6.3773691 (MICROSOFT) ou encore EP 0.915.590 (PHONE.COM).

Face à cet état des choses, le principal problème technique que vise à résoudre l'invention est de proposer un nouveau protocole d'authentification basée sur la technique connue du défi/réponse par clé secrète, ce nouveau protocole d'authentification étant toutefois plus sécurisé que les protocoles connus de l'art antérieur et en particulier ceux du type CRAM.

Un autre objectif de l'invention est de rendre plus difficile le piratage d'un terminal mobile en vue de trouver les clés secrètes.

Encore un autre objectif de l'invention est de rendre plus difficile le piratage d'un serveur en vue de trouver les clés secrètes.

### EXPOSÉ DE L'INVENTION

L'invention vise à remédier aux problèmes liés aux difficultés techniques rencontrées dans la sécurisation de protocoles de communication.

Plus précisément, l'invention a pour objet un procédé pour authentifier un terminal mobile client auprès d'un serveur distant dudit terminal, ledit serveur envoyant préalablement audit terminal mobile un défi, ledit terminal mobile devant, pour s'authentifier, répondre au défi en transmettant une réponse consistant à encoder ledit défi combiné à une clé secrète connue à la fois dudit terminal et dudit serveur. Ce procédé est remarquable en ce que la clé secrete est cachée par stéganographie dans un fichier média enregistré sur le terminal mobile.

Cette solution technique est particulièrement avantageuse, car même si une tierce personne arrive à pirater le terminal mobile, il lui sera très difficile de déceler la clé secrète cachée. La stéganographie permet en effet de dissimuler la clé secrète dans le fichier média de sorte que sa présence soit imperceptible et donc indécelable, par un fraudeur.

Plus particulièrement, le procédé objet de l'invention consiste à :
- envoyer une requête d'authentification, du terminal mobile vers le serveur,
- envoyer un défi, du serveur vers le terminal mobile,
- extraire, au niveau du terminal mobile, la clé secrète du fichier média en exécutant un algorithme de stéganographie inverse,
- générer :
   - au niveau du terminal mobile, une réponse au défi, ladite réponse consistant à encoder le défi combiné à la clé secrète par un algorithme d'encodage connu du serveur et dudit terminal,
   - au niveau du serveur, une réponse type au défi, ladite réponse type consistant à encoder le défi combiné à la clé secrète par le même algorithme d'encodage,
- envoyer la réponse du terminal mobile vers le serveur,
- comparer, au niveau du serveur, la réponse reçue avec la réponse type,
- authentifier le terminal mobile si la réponse correspond à la réponse type.

On peut prévoir une phase d'initialisation consistant à :
- envoyer une requête initiale pour télécharger les ressources d'une application informatique associée à une fonctionnalité, du terminal mobile vers le serveur, ladite requête contenant un mot de passe client connu dudit serveur,
- authentifier, au niveau du serveur, le mot de passe client reçu et générer une clé secrète,
- cacher, au niveau du serveur, la clé secrète dans un fichier média, en appliquant un algorithme de stéganographie amorcé par le mot de passe client,
- transférer les ressources de l'application informatique, y compris le fichier média contenant la clé secrète, du serveur vers le terminal mobile.

Le défi comporte préférentiellement, en complément de la clé secrète, un nombre aléatoire et un marqueur de temps, la génération de la réponse au niveau du terminal mobile et de la réponse type au niveau du serveur consistant à encoder : la clé secrète, ledit nombre aléatoire et ledit marqueur de temps, par un algorithme connu dudit serveur et dudit terminal.

Dans le but de renforcer la sécurité du protocole d'authentification, on prévoit plusieurs clés secrètes pour un même utilisateur. Pour ce faire :
- plusieurs clés secrètes sont associées à des indices dans un tableau, ce dernier étant caché par stéganographie dans un fichier média enregistré sur le terminal mobile,
- le défi envoyé par le serveur contient un indice appartenant au tableau,
- la réponse envoyée par le terminal mobile comporte la clé secrète associée à l'indice.

Dans le cas où plusieurs clés secrètes sont prévues, le procédé consiste avantageusement à :
- envoyer une requête d'authentification, du terminal mobile vers le serveur,
- envoyer un défi comportant un indice appartenant au tableau, du serveur vers le terminal mobile,
- extraire, au niveau du terminal mobile, le tableau du fichier média en exécutant un algorithme de stéganographie inverse, puis extraire dudit tableau la clé secrète associée à l'indice,
- générer :
   - au niveau du terminal mobile, une réponse au défi, ladite réponse consistant à encoder ledit défi combiné à la clé secrète associée à l'indice par un algorithme d'encodage connu du serveur et dudit terminal,
   - au niveau du serveur, une réponse type au défi, ladite réponse type consistant à encoder ledit défi combiné à la clé secrète associée à l'indice par le même algorithme d'encodage,
- envoyer la réponse du terminal mobile vers le serveur,
- comparer, au niveau du serveur, la réponse reçue avec la réponse type, authentifier le terminal mobile si la réponse correspond à la réponse type.

On peut également prévoir une phase d'initialisation consistant à:
- envoyer une requête initiale pour télécharger les ressources d'une application informatique associée à une fonctionnalité, du terminal mobile vers le serveur, ladite requête contenant un mot de passe client connu dudit serveur,
- authentifier, au niveau du serveur, le mot de passe client reçu et générer un tableau associant des indices à des clés secrètes,
- cacher, au niveau du serveur, le tableau dans un fichier média, en appliquant un algorithme de stéganographie amorcé par le mot de passe client,
- transférer les ressources de l'application informatique, y compris le fichier média contenant le tableau, du serveur vers le terminal mobile.

Le défi comporte avantageusement, en complément de l'indice, un nombre aléatoire et un marqueur de temps, la génération de la réponse au niveau du terminal mobile et de la réponse type au niveau du serveur consistant à encoder : la clé secrète associée à l'indice, ledit nombre aléatoire et ledit marqueur de temps, par un algorithme connu dudit serveur et dudit terminal.

Préférentiellement, le fichier média est un fichier image, audio ou vidéo faisant partie des ressources de l'application informatique téléchargées sur le terminal mobile.

Le fichier média contenant la clé secrète ou le tableau est préférentiellement enregistré dans la mémoire du serveur de sorte que si une tierce personne arrive à pirater ledit serveur, il lui sera très difficile, voire impossible, de déceler la (ou les) clé(s) secrète(s) cachée(s). Dans le cas où une seule clé secrète est prévue, avant de générer la réponse type, le serveur extrait la clé secrète du fichier média enregistré dans sa mémoire en exécutant un algorithme de stéganographie inverse. Dans le cas où un tableau de clés secrètes est prévu, avant de générer la réponse type, le serveur extrait le tableau du fichier média enregistré dans sa mémoire en exécutant un algorithme de stéganographie inverse, puis extrait dudit tableau la clé secrète associée à l'indice.

Préférentiellement, l'algorithme d'encodage permettant de générer la réponse au niveau du terminal mobile et de la réponse type au niveau du serveur, est un algorithme de codage et de cryptage intégrant une fonction de hachage.

Un autre aspect de l'invention est un dispositif pour authentifier un terminal mobile client auprès d'un serveur distant dudit terminal, ledit serveur envoyant préalablement audit terminal mobile un défi, ledit terminal mobile étant configuré pour répondre au défi en transmettant une réponse consistant à encoder ledit défi combiné à une clé secrète connue à la fois dudit terminal et dudit serveur. Ce dispositif est remarquable en ce que la clé secrète est cachée par stéganographie dans un fichier média sur le terminal mobile.

Pour renforcer la sécurité du dispositif d'authentification, on prévoit plusieurs clés secrètes pour un même utilisateur.

Pour ce faire :
- le terminal mobile comprend une zone-mémoire dans laquelle est enregistré un fichier média dans lequel est caché, par stéganographie, un tableau associant des indices à des clés secrètes,
- le serveur comporte un processeur configuré pour envoyer un défi contenant un indice appartenant au tableau,
- le terminal mobile comporte un processeur configuré pour émettre une réponse au défi, ladite réponse contenant ledit défi combiné à la clé secrète associée à l'indice transmis avec ledit défi.

Dans ce dernier cas, il est avantageux que le terminal mobile comporte un processeur configuré pour :
- envoyer une requête d'authentification vers le serveur,
- extraire le tableau du fichier média en appliquant un algorithme de stéganographie inverse, et extraire dudit tableau la clé secrète associée à un indice transmis par le serveur,
- exécuter un algorithme permettant d'encoder un signal de défi combiné à la clé secrète associée à l'indice pour générer une réponse audit défi,
- envoyer la réponse vers le serveur, et que le serveur comporte un processeur configuré pour :
   - générer et envoyer au terminal mobile, un signal de défi comportant un indice appartenant au tableau,
   - exécuter un algorithme permettant d'encoder le signal de défi combiné à la clé secrète associée à l'indice pour générer une réponse type audit défi,
   - comparer la réponse transmise par le terminal mobile à la réponse type,
   - authentifier le terminal mobile si la réponse correspond à la réponse type.

Préférentiellement, le serveur comporte un processeur configuré pour :
- générer le tableau associant des indices à des clés secrètes,
- exécuter un algorithme de stéganographie permettant de cacher ledit tableau dans un fichier média,
- transférer ce fichier média vers la zone-mémoire du terminal mobile.

Encore un autre aspect de l'invention concerne un terminal mobile destiné à être utilisé pour la mise en oeuvre du procédé conforme à l'invention, ledit terminal comprenant une zone-mémoire dans laquelle est enregistré un fichier média dans lequel est caché, par stéganographie, une clé secrète ou préférentiellement un tableau associant des indices à des clés secrètes.

### BRÈVE DESCRIPTION DES FIGURES

D'autres caractéristiques et avantages de l'invention ressortiront à la lecture de la description qui suit, en référence aux figures annexées, qui illustrent :
- la figure 1, illustre précitée illustre les différentes étapes d'un procédé d'authentification de type CRAM connu de l'art antérieur,
- la figure 2, illustre une étape d'initialisation d'un premier procédé d'authentification conforme à l'invention,
- la figure 3 schématise l'insertion d'une clé secrète dans une image par stéganographie,
- la figure 4 illustre les différentes étapes du premier procédé d'authentification objet de l'invention,
- la figure 5 illustre une étape d'initialisation d'un second procédé d'authentification conforme à l'invention,
- la figure 6 schématise l'insertion d'un tableau de clés secrètes dans une image par stéganographie,
- la figure 7 illustre les différentes étapes du second procédé d'authentification objet de l'invention.

Pour plus de clarté, les éléments identiques ou similaires sont repérés par des signes de référence identiques sur l'ensemble des figures.

### DESCRIPTION DETAILLEE D'UN MODE DE RÉALISATION

Le procédé d'authentification objet de l'invention fait appel à au moins un terminal mobile client TM et un serveur S distant dudit terminal. Le terminal mobile client TM peut être un téléphone mobile, un ordinateur portable, un appareil du type assistant digital personnel (PDA), ou tout autre terminal mobile de communication (BlackBerry®, ...). Le terminal mobile TM est configuré pour se connecter à un réseau de communication, préférentiellement les réseaux de téléphonie mobile du type MSM®, Jabber®, Yahoo !®, etc.

D'une manière bien connue de l'homme du métier, il est équipé d'un processeur, configuré pour exécuter un ou plusieurs programmes, sous-programmes, microprogrammes ou tous autres types de software équivalents, afin de gérer différentes étapes du protocole d'authentification du type défi/réponse qui vont être décrites en detail dans la suite de la description. Le terminal mobile TM intègre également un certain nombre d'applications informatiques (programmes, sous-programmes, microprogrammes, ...) lui permettant de mettre en oeuvre les différentes fonctionnalités qu'il intègre : mails, blog, messagerie instantanée, transfert sécurisé de données, etc.

Le serveur S est préférentiellement, mais non exclusivement, un serveur virtuel (ou « gateway » en anglais) consistant en un ordinateur ou un programme informatique configuré pour proposer certains fonctionnalités (mails, blog, ...) et en particulier des services de messagerie instantanée, aux terminaux mobiles clients TM qui s'y connectent. Le serveur S est préférentiellement associé à différentes communautés de messagerie instantanée. Il est connecté à un réseau de communication (MSM®, Jabber®, Yahoo !®, ou autre) habituellement employé pour mettre en oeuvre les différentes fonctionnalités citées précédemment.

D'une manière bien connue, ce serveur S est équipé d'un processeur configuré pour exécuter un ou plusieurs programmes, sous-programmes, microprogrammes ou tous autres types de software équivalents, afin de gérer différentes étapes du protocole d'authentification du type défi/réponse qui vont être décrites en détail dans la suite de la description.

Le protocole d'authentification mis en oeuvre dans la présente invention est basé sur le principe du défi/réponse : le serveur S et le terminal mobile TM partagent la connaissance d'au moins une clé secrète Ki et d'un algorithme de calcul Enc d'une réponse R, R' à un défi Def. L'algorithme de calcul Enc peut être public, c'est-à-dire connu de tout le monde. La clé secrète Ki et la fonction de calcul Enc sont incorporées dans les ressources du terminal mobile TM et du serveur S.

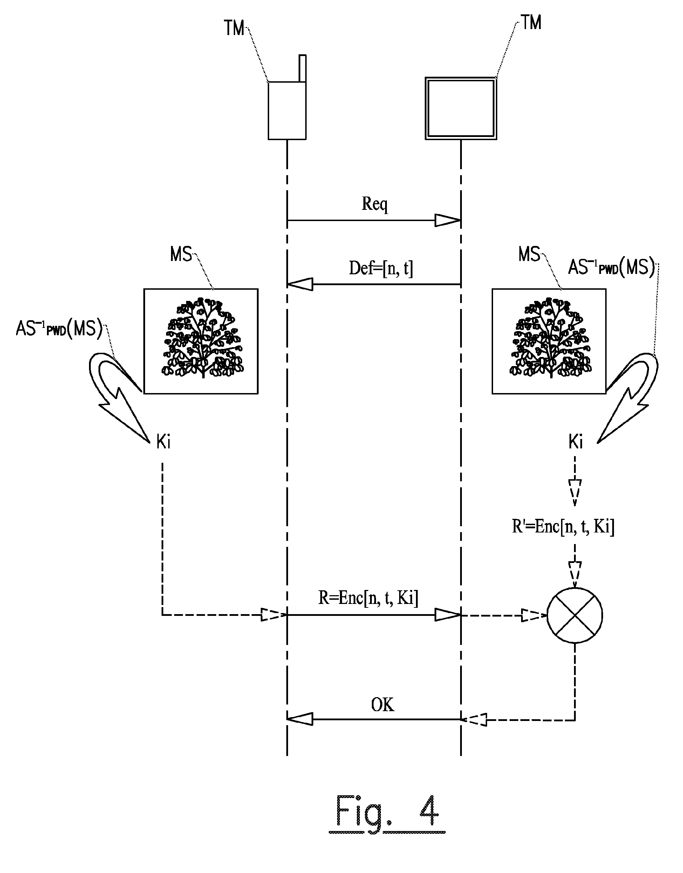

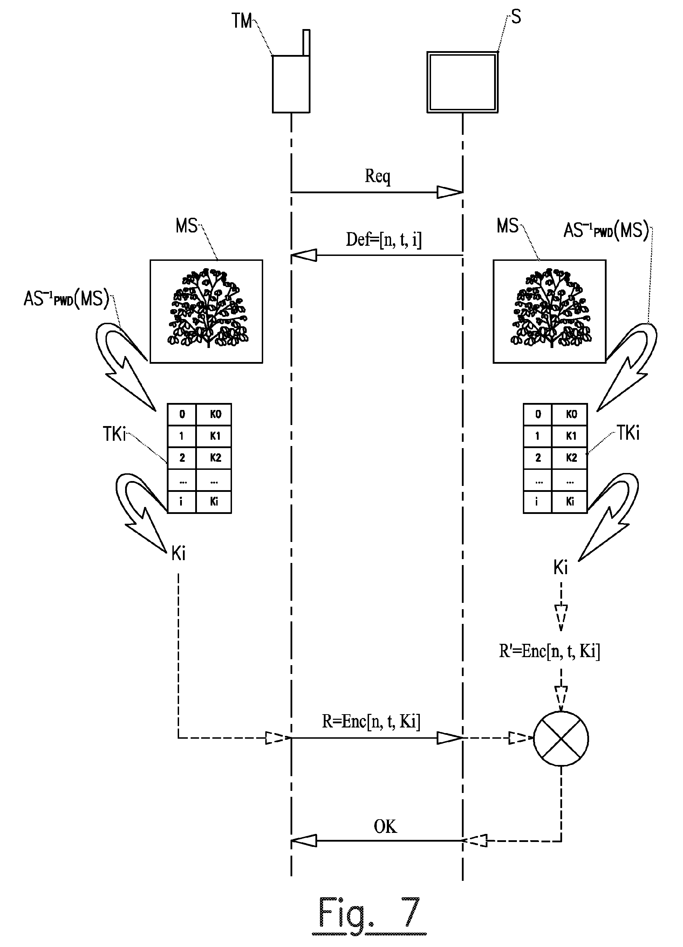

En se rapportant par exemple aux figures 4 et 7, le terminal mobile TM envoie au serveur S une requête d'authentification Req en vue d'activer une ou plusieurs des fonctionnalités citées précédemment. La requête Req est émise sur un canal de transmission filaire ou sans fil, du type internet, radio, GSM, ou autre, permettant l'échange de données entre le serveur S et le terminal mobile TM. La requête Req contient avantageusement l'identification du client (par exemple son nom d'utilisateur) et une indication de la ou des fonctionnalités qui doivent être activées.

Avant d'activer la ou les fonctionnalités, le serveur S doit authentifier le terminal mobile TM. Pour ce faire, il envoie au terminal mobile TM un signal de défi Def. Ce dernier est émis sur le canal de transmission (ou un autre canal) reliant le terminal mobile TM au serveur S. Le défi Def intègre en principe un nombre aléatoire n.

Ce nombre n est en pratique un nombre entier hexadécimal de plusieurs bits généré par un générateur de nombres pseudo-aléatoire (PNRG) intégré dans le serveur S. Le défi peut également intégrer un marqueur de temps t. Il est par exemple possible d'implémenter le marqueur t comme un nombre hexadécimal incrémenté à chaque réception d'une requête Req (donc évoluant dans le temps).

Toutefois, d'autres techniques sont connues de l'homme du métier pour implémenter le marqueur t. En pratique, le marqueur de temps t correspond à la date de création du nombre aléatoire n. Le nombre n et le marqueur t servent à augmenter l'entropie (difficulté de falsification) de la réponse au défi Def.

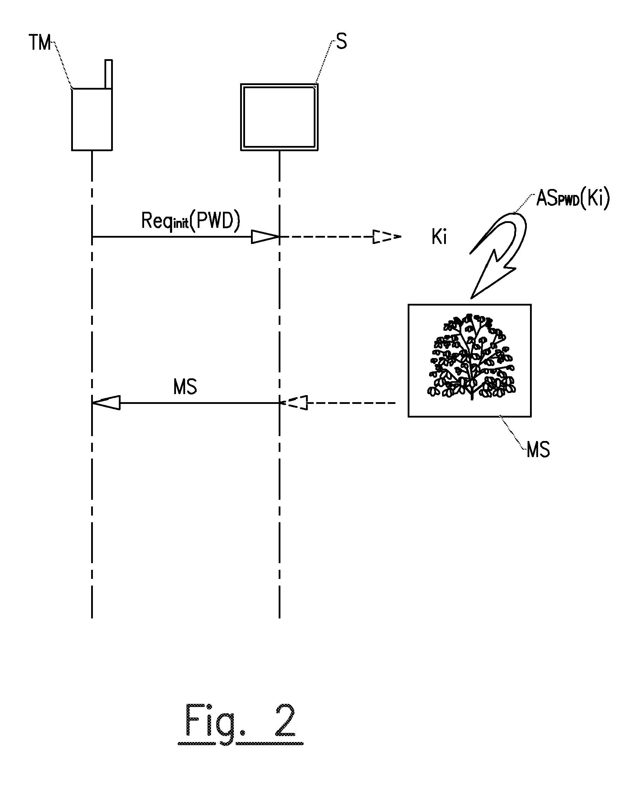

Pour s'authentifier, le terminal mobile TM doit répondre au défi Def en transmettant une réponse R consistant à encoder le défi Def combiné à une clé secrète Ki connue à la fois dudit terminal et du serveur S. Selon un premier mode de réalisation de l'invention représenté sur les figures 2 à 4, une clé secrète Ki est cachée par stéganographie dans un fichier média MS enregistré sur le terminal mobile TM. La stéganographie est une technique qui permet de dissimuler une information (la clé secrète Ki) dans un support (le fichier média MS) de sorte que la présence de l'information sur le support soit imperceptible (ni visuellement, ni de manière audible) et donc indécelable, par une personne.

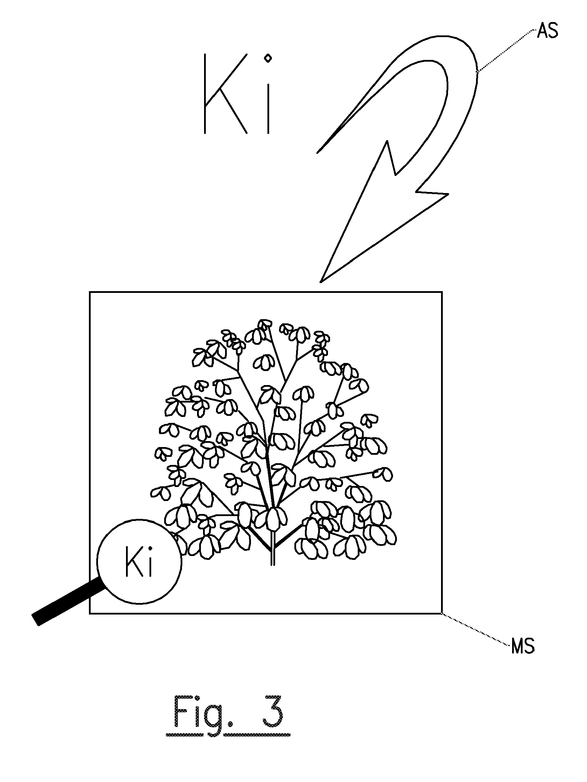

Dans la présente invention, la clé secrète Ki se présente avantageusement sous la forme d'un nombre hexadécimal de plusieurs bits. Le fichier média MS est de manière générale un fichier binaire faisant partie des ressources de l'application informatique associée à une fonctionnalité embarquée sur le terminal mobile TM. Il s'agit en pratique d'un fichier image (JPEG, MPEG, ...), d'un fichier audio (MP3, ...) ou d'un fichier vidéo (MPEG2, MPEG 4, ...). Il peut par exemple s'agir d'une image de fond d'écran, d'un message d'accueil audio ou vidéo. Le cas où la clé secrèet Ki est dissimulée dans une image JPEG ou MPEG est illustré sur la figure 3 : si l'image représente un arbre avec des feuilles, la clé secrète Ki pourra être cachée dans des pixels correspondants à une des feuilles de l'arbre ou ailleurs, car on ne contrôle pas forcément l'endroit ou sera cachée ladite clé secrète.

L'algorithme de stéganographie AS préférentiellement utilisé est du type utilisant la technique LSB (pour « Least Significant Bit » en anglais). Cet algorithme consiste à remplacer les bits de poids faible des octets codant l'intensité lumineuse des pixels de l'image par les bits de la clé secrète. En modifiant un bit de poids faible, il est possible de modifier légèrement l'intensité lumineuse ou la teinte d'un pixel de l'image.

Cette modification légère est imperceptible pour l'oeil humain et indécelable lorsqu'on analyse l'ensemble des octets codant l'intensité lumineuse des pixels de l'image. Par exemple, si l'intensité lumineuse des pixels de l'image est codée par les octets : 001-000-100-110-101 et que la clé secrète Ki correspond au nombre : 11111, alors l'image modifiée sera codée par les octets suivants : 001-001-101-111-101.

Le même algorithme de stéganographie peut être utilisé pour la dissimulation de la clé secrète Ki dans un fichier vidéo. Dans un fichier audio, on peut cacher de l'information dans des variations imperceptibles du son codées par des bits faiblement significatifs. Bien évidemment, tout autre algorithme de stéganographie convenant à l'homme du métier peut être utilisé.

Le fichier média MS dans lequel est dissimulé la clé secrète Ki est stocké dans une zone-mémoire du terminal mobile TM. Ce fichier média MS peut être enregistré dés la conception du terminal mobile TM mais a préférentiellement été téléchargé lors d'une phase d'initialisation représentée sur la figure 2. Dans ce cas, le terminal mobile TM envoie au serveur S une requête initiale Reqᵢₙᵢₜ pour télécharger les ressources d'une application informatique associée à une ou plusieurs fonctionnalités que le client souhaite obtenir. Cette requête initiale comporte un mot de passe PWD éventuellement associé à l'identifiant du client.

Lorsque le serveur S reçoit cette requête initiale Reqᵢₙᵢₜ, il authentifie le mot de passe et génère la clé secrète Ki. Le serveur S applique alors un algorithme de stéganographie AS_{PWD} amorcé par le mot de passe PWD, pour cacher la clé secrète Ki dans un fichier média MS faisant préférentiellement partie des ressources de l'application informatique. L'algorithme de stéganographie AS_{PWD} est propre à chaque mot de passe et donc à chaque client. Le serveur S transfère ensuite vers le terminal mobile TM, les ressources de l'application informatique, y compris le fichier média MS contenant la clé secrète Ki. Même si le fichier média MS est intercepté par un fraudeur au cours de sa transmission vers le terminal mobile TM, le fraudeur n'aura pratiquement aucune chance de déceler la clé secrète Ki. Seule la clé secrète Ki peut être stockée du côté serveur S. Toutefois, pour optimiser la sécurité du procédé objet de l'invention, on préfère enregistrer dans la mémoire du serveur S, le fichier média MS contenant la clé secrète Ki.

En se rapportant à la figure 4, lorsque le terminal mobile TM reçoit le défi Def, il extrait la clé secrète Ki du fichier média MS en exécutant un algorithme de stéganographie inverse AS_{PWD} qui est propre à chaque mot de passe PWD et donc à chaque client. Cet algorithme de stéganographie inverse AS_{PWD} peut être implanté dans le terminal mobile TM dès sa conception ou, préférentiellement, fait partie des ressources téléchargées lors de la phase d'initialisation. Une réponse R au défi Def est alors générée, ladite réponse consistant à encoder la clé secrète Ki combinée audit défi, et éventuellement le nombre aléatoire n, et le marqueur de temps t, par un algorithme d'encodage Enc connu du serveur S et du terminal mobile TM. Dans le même temps, le serveur S génère une réponse type R' consistant à encoder la clé secrète Ki combiné au défi Def, et éventuellement le nombre aléatoire n, et le marqueur de temps t, par le même algorithme d'encodage Enc. Dans le cas où le fichier média MS contenant la clé secrète Ki est enregistré dans la mémoire du serveur S, ce dernier extrait préalablement ladite clé du fichier en exécutant l'algorithme de stéganographie inverse AS_{PWD} correspondant au mot de passe PWD. Après avoir généré sa réponse R, le terminal mobile TM la transmet au serveur S. Ce dernier compare, par l'intermédiaire d'un algorithme de comparaison, la réponse R reçue avec la réponse type R' qu'il a lui-même générée. Si la réponse R correspond à la réponse type R', alors le terminal mobile TM est authentifié et le serveur S peut activer la ou les fonctionnalités souhaitées par le client. Dans le cas contraire, un message d'erreur peut être envoyé du serveur S vers le terminal mobile TM.

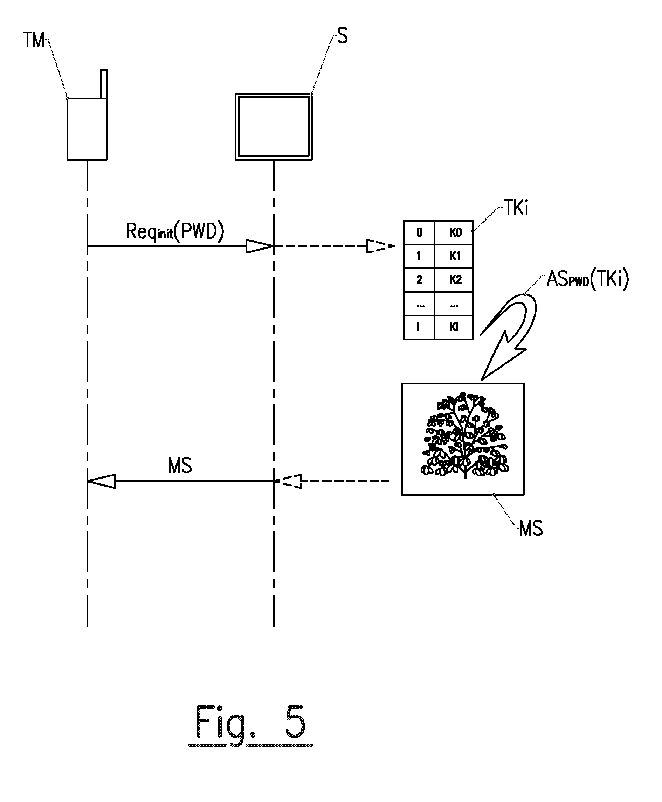

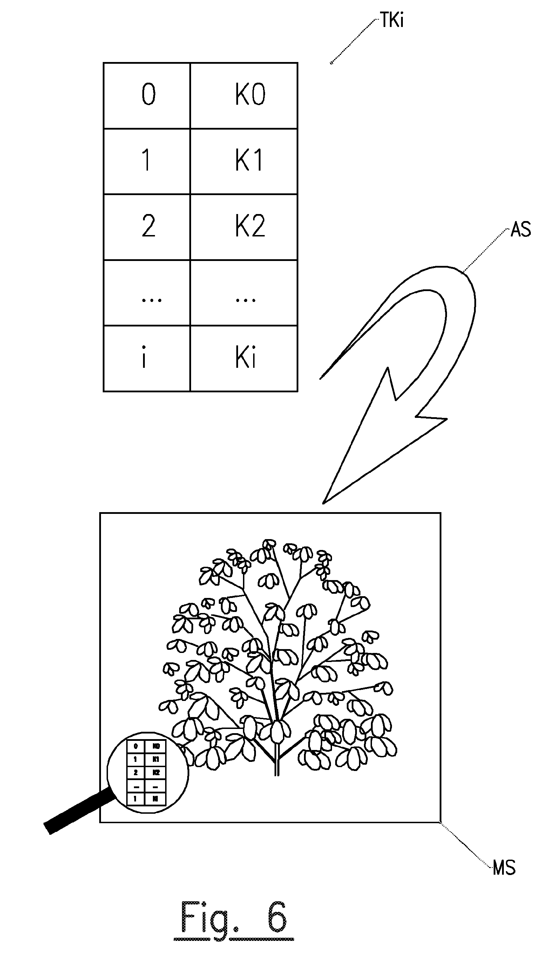

Selon un second mode de réalisation de l'invention représenté sur les figures 5 à 7, on prévoit plusieurs clés secrètes pour un même utilisateur. En se rapportant à la figure 6, plusieurs clés secrètes K0, K1, ... Ki, sont associées à des indices 0, 1, ..., i dans un tableau TKi.

En principe, chaque clé secrète et chaque indice se présentent sous la forme de nombres hexadécimaux. Le tableau TKi se présente alors sous la forme d'un arrangement de nombres hexadécimaux qui peut coder une image fixe ou mobile, un son, etc. Comme décrit précédemment, et en se rapportant à la figure 6, le tableau TKi est caché par stéganographie dans un fichier média MS enregistré sur le terminal mobile TM. Le fichier média MS dans lequel est dissimulé le tableau TKi est stocké dans une zone-mémoire du terminal mobile TM.

Le fichier média MS peut être enregistré dés la conception du terminal mobile TM mais a préférentiellement été téléchargé lors d'une phase d'initialisation représentée sur la figure 5. Dans ce cas, et de la même manière que décrit précédemment, le terminal mobile TM envoie au serveur S une requête initiale Reqᵢₙᵢₜ pour télécharger les ressources d'une application informatique associée à une ou plusieurs fonctionnalités que le client souhaite obtenir. Cette requête initiale comporte un mot de passe PWD éventuellement associé au nom d'utilisateur du client. Lorsque le serveur S reçoit cette requête initiale Reqⱼₙⱼₜ, il authentifie le mot de passe et génère un tableau TKi associant des indices 0, 1, ..., i à des clés secrètes K0, K1, ... Ki. Le tableau TKi généré est propre à chaque client. Le serveur S applique alors un algorithme de stéganographie AS_{PWD} amorcé par le mot de passe PWD, pour cacher le tableau TKi dans un fichier média MS faisant préférentiellement partie des ressources de l'application informatique. Le serveur S transfère ensuite vers le terminal mobile TM, les ressources de l'application informatique, y compris le fichier média MS contenant le tableau TKi. Seul le tableau TKi peut être stocké du côté serveur S, mais on préfère enregistrer dans sa mémoire le fichier média MS.

En se rapportant à la figure 7, après avoir reçu la requête d'authentification Req provenant du terminal mobile TM, le serveur S envoie à ce dernier un défi Def contenant un indice i appartenant au tableau TKi. Comme évoqué précédemment, le défi Def peut en outre comporter un nombre aléatoire n et un marqueur de temps t. Lorsque le terminal mobile TM reçoit le défi Def, il extrait le tableau TKi du fichier média MS en exécutant un algorithme de stéganographie inverse AS_{PWD}.

Cet algorithme de stéganographie inverse AS_{PWD} peut être implanté dans le terminal mobile TM dès sa conception ou, préférentiellement, fait partie des ressources téléchargées lors de la phase d'initialisation. Après analyse de l'indice i reçu avec le défi Def, la clé secrète Ki associée audit indice est ensuite extraite du tableau TKi.

Une réponse R au défi Def est alors générée, ladite réponse consistant à encoder ledit défi combiné à la clé secrète Ki ainsi extraite, et éventuellement le nombre aléatoire n, et le marqueur de temps t, par un algorithme d'encodage Enc connu du serveur S et du terminal mobile TM.

Dans le même temps, le serveur S génère une réponse type R' consistant à encoder le défi Def combiné à la clé secrète Ki, et éventuellement le nombre aléatoire n, et le marqueur de temps t, par le même algorithme d'encodage Enc.

Dans le cas où le fichier média MS contenant le tableau TKi est enregistré dans la mémoire du serveur S, ce dernier extrait préalablement ledit tableau du fichier en exécutant l'algorithme de stéganographie inverse AS_{PWD} correspondant au mot de passe PWD, puis extrait dudit tableau la clé secrète Ki associé à l'indice i. Après avoir généré sa réponse R, le terminal mobile TM la transmet au serveur S. Ce dernier compare la réponse R reçue avec la réponse type R'. Si la réponse R correspond à la réponse type R', alors le terminal mobile TM est authentifié et le serveur S peut activer la ou les fonctionnalités souhaitées par le client. Dans le cas contraire, un message d'erreur peut être envoyé du serveur S vers le terminal mobile TM.

L'algorithme d'encodage Enc permettant de générer la réponse R au niveau du terminal mobile TM et de la réponse type R' au niveau du serveur S, est un algorithme de codage ou de cryptage, préférentiellement un algorithme de codage (utiliser pour le transport) combiné à un cryptage (chiffrage) et intégrant une fonction de hachage. Le hachage permet d'augmenter l'entropie des réponses R, R' au défi Def. En pratique, l'algorithme utilisé est la combinaison d'un algorithme de cryptage/hachage (par exemple du type MD5, MD6, SHA-1, SHA-2) ou des évolutions de ces dernières, avec un algorithme d'encodage (par exemple en Base64). Les Réponse R ou R' peuvent par exemple être calculées selon la formule suivante : R ou R' = Base64[SHA-256(n + t + Ki )]

## Revendications

1. Procédé pour authentifier un terminal mobile client (TM) auprès d'un serveur (S) distant dudit terminal, ledit serveur envoyant préalablement audit terminal mobile un défi (Def), ledit terminal mobile devant, pour s'authentifier, répondre au défi en transmettant une réponse (R) consistant à encoder ledit défi combiné à une clé secrète (Ki) connue à la fois dudit terminal et dudit serveur, **se caractérisant par le fait que** la clé secrète (Ki) est cachée par stéganographie dans un fichier média (MS) enregistré sur le terminal mobile (TM).

2. Procédé selon la revendication 1, consistant à :
- envoyer une requête d'authentification, du terminal mobile (TM) vers le serveur (S),
- envoyer un défi (Def), du serveur (S) vers le terminal mobile (TM),
- extraire, au niveau du terminal mobile (TM), la clé secrète (Ki) du fichier média (MS) en exécutant un algorithme de stéganographie inverse (AS),
- générer :
• au niveau du terminal mobile (TM), une réponse (R) au défi (Def), ladite réponse consistant à encoder ledit défi combiné à la clé secrete (Ki) par un algorithme d'encodage connu du serveur (S) et dudit terminal,
• au niveau du serveur (S), une réponse type (R') au défi (Def), ladite réponse type consistant à encoder ledit défi combiné à la clé secrete (Ki) par le même algorithme d'encodage,
- envoyer la réponse (R) du terminal mobile (TM) vers le serveur (S),
- comparer, au niveau du serveur (S), la réponse (R) reçue avec la réponse type (R'),
- authentifier le terminal mobile (TM) si la réponse (R) correspond à la réponse type (R').

3. Procédé selon l'une des revendications précédentes, comportant une phase d'initialisation consistant à :
- envoyer une requête initiale (Reqᵢₙᵢₜ) pour télécharger les resources d'une application informatique associée à une fonctionnalité, du terminal mobile (TM) vers le serveur (S), ladite requête contenant un mot de passé client (PWD) connu dudit terminal et dudit serveur,
- authentifier, au niveau du serveur (S), le mot de passe client (PWD) reçu et générer une clé secrète (Ki),
- cacher, au niveau du serveur (S), la clé secrète (Ki) dans un fichier média (MS), en appliquant un algorithme de stéganographie (AS_{PWD}) amorcé par le mot de passe client (PWD),
- transférer les ressources de l'application informatique, y compris le fichier média (MS) contenant la clé secrète (Ki), du serveur (S) vers le terminal mobile (TM).

4. Procédé selon l'une des revendications 2 ou 3, dans lequel le défi (Def) comporte, en complément de la clé secrète (Ki), un nombre aléatoire (n) et un marqueur de temps (t), la génération de la réponse (R) au niveau du terminal mobile (TM) et de la réponse type (R') au niveau du serveur (S) consistant à encoder : ladite clé secrète, ledit nombre aléatoire et ledit marqueur de temps, par un algorithme connu dudit serveur et dudit terminal.

5. Procédé selon la revendication 1, dans lequel :
- plusieurs clés secrètes (K0, K1, ..., Ki) sont associées à des indices (0, 1, ..., i) dans un tableau (TKi), ce dernier étant caché par stéganographie dans un fichier média (MS) enregistré sur le terminal mobile (TM),
- le défi (Def) envoyé par le serveur (S) contient un indice (i) appartenant au tableau (TKi),
- la réponse (R) envoyée par le terminal mobile (TM) comporte la clé secrète (Ki) associée à l'indice (i).

6. Procédé selon la revendication 5, consistant à :
- envoyer une requête d'authentification (Req), du terminal mobile (TM) vers le serveur (S),
- envoyer un défi (Def) comportant un indice (i) appartenant au tableau (TKi), du serveur (S) vers le terminal mobile (TM),
- extraire, au niveau du terminal mobile (TM), le tableau (TKi) du fichier média (MS) en exécutant un algorithme de stéganographie inverse en exécutant un algorithme de stéganographie inverse (AS), puis extraire
dudit tableau la clé secrète (Ki) associée à l'indice (i),
- générer :
• au niveau du terminal mobile (TM), une réponse (R) au défi (Def), ladite réponse consistant à encoder ledit défi combiné à la clé secrète (Ki) associée à l'indice (i) par un algorithme d'encodage (Enc) connu du serveur (S) et dudit terminal,
• au niveau du serveur (S), une réponse type (R') au défi (Def), ladite réponse type consistant à encoder ledit défi combiné à la clé secrète (Ki) associée à l'indice (i) par le même algorithme d'encodage (Enc),
- envoyer la réponse (R) du terminal mobile (TM) vers le serveur (S),
- comparer, au niveau du serveur (S), la réponse (R) reçue avec la réponse type (R'),
- authentifier le terminal mobile (TM) si la réponse (R) correspond à la réponse type (R').

7. Procédé selon l'une des revendications 5 ou 6, comportant une phase d'initialisation consistant à :
- envoyer une requête initiale (Reqᵢₙᵢₜ) pour télécharger les ressources d'une application informatique associée à une fonctionnalité, du terminal mobile (TM) vers le serveur (S), ladite requête contenant un mot de passe client (PWD) connu dudit terminal et dudit serveur,
- authentifier, au niveau du serveur (S), le mot de passe client (PWD) reçu et générer un tableau (TKi) associant des indices (0, 1, ..., i) à des clés secrètes (K0, K1, ..., Ki),
- cacher, au niveau du serveur (S), le tableau (TKi) dans un fichier média (MS), en exécutant un algorithme de stéganographie (AS_{PWD}) amorcé par le mot de passe client (PWD),
- transférer les ressources de l'application informatique, y compris le fichier média (MS) contenant le tableau (TKi), du serveur (S) vers le terminal mobile (TM). 10

8. Procédé selon l'une des revendications 6 ou 7, dans lequel le défi (Def) comporte, en complément de l'indice (i), un nombre aléatoire (n) et un marqueur de temps (t), la génération de la réponse (R) au niveau du terminal mobile (TM) et de la réponse type (R') au niveau du serveur (S) consistant à encoder : la clé secrète (Ki) associée à l'indice (i), ledit nombre aléatoire et ledit marqueur de temps, par un algorithme connu dudit serveur et dudit terminal.

9. Procédé selon l'une des revendications 3 ou 7, dans lequel le fichier média (MS) est un fichier image faisant partie des ressources de l'application informatique téléchargées sur le terminal mobile (TM).

10. Procédé selon l'une des revendications 3 ou 7, dans lequel le fichier média (MS) est un fichier audio faisant partie des ressources de l'application informatique téléchargées sur le terminal mobile (TM).

11. Procédé selon l'une des revendications 3 ou 7, dans lequel le fichier média (MS) est un fichier vidéo faisant partie des ressources de l'application informatique téléchargées sur le terminal mobile (TM).

12. Procédé selon l'une des revendications précédentes, dans lequel le fichier média (MS) contenant la clé secrète (Ki) ou le tableau (TKi) est également enregistré dans la mémoire du serveur (S).

13. Procédé selon la revendication 12 prise en combinaison avec la revendication 2, dans lequel avant de générer la réponse type (R'), le serveur extrait la clé secrète du fichier média (MS) enregistré dans sa mémoire en exécutant un algorithme de stéganographie inverse (AS).

14. Procédé selon la revendication 12 prise en combinaison avec la revendication 7, dans lequel avant de générer la réponse type (R'), le serveur extrait le tableau (TKi) du fichier média (MS) enregistré dans sa mémoire en exécutant un algorithme de stéganographie inverse (AS), puis extrait dudit tableau la clé secrète (Ki) associée à l'indice (i).

15. Procédé selon l'une des revendications précédentes, dans lequel l'algorithme d'encodage (Enc) permettant de générer la réponse (R) au niveau du terminal mobile (TM) et la réponse type (R') au niveau du serveur (S), est un algorithme de codage et de cryptage intégrant une fonction de hachage.

16. Dispositif pour authentifier un terminal mobile client (TM) auprès d'un serveur (S) distant dudit terminal, ledit serveur envoyant préalablement audit terminal mobile un défi (Def), ledit terminal mobile étant configuré pour répondre au défi en transmettant une réponse (R) consistant à encoder ledit défi combiné à une clé secrète (Ki) connue à la fois dudit terminal et dudit serveur, **se caractérisant par le fait que** la clé secrète (Ki) est cachée par stéganographie dans un fichier média (MS) enregistré sur le terminal mobile (TM).

17. Dispositif selon la revendication 16, dans lequel :
- le terminal mobile (TM) comprend une zone-mémoire dans laquelle est enregistré un fichier média (MS) dans lequel est caché, par stéganographie, un tableau (TKi) associant des indices (0, 1, ..., i) à des clés secrètes (K0, K1, ..., Ki),
- le serveur (S) comporte un processeur configuré pour envoyer un défi (Def) contenant un indice (i) appartenant au tableau (TKi),
- le terminal mobile (TM) comporte un processeur configuré pour émettre une réponse (R) au défi (Def), ladite réponse contenant ledit défi combiné à la clé secrète (Ki) associée à l'indice (i) transmis avec ledit défi.

18. Dispositif selon la revendication 17, dans lequel :
- le terminal mobile (TM) comporte un processeur configuré pour :
• envoyer une requête d'authentification vers le serveur (S),
• extraire le tableau (TKi) du fichier média (MS) en appliquant un algorithme de stéganographie inverse (AS), et extraire dudit tableau la clé secrète (Ki) associée à un indice (i) transmis par le serveur,
• exécuter un algorithme permettant d'encoder un signal de défi (Def) combiné à la clé secrète (Ki) associée à l'indice (i) pour générer une réponse (R) audit défi,
• envoyer la réponse (R) vers le serveur (S),
- le serveur (S) comporte un processeur configuré pour :
• générer et envoyer au terminal mobile (TM), un signal de défi (Def) comportant un indice (i) appartenant au tableau (TKi),
• exécuter un algorithme permettant d'encoder le signal de défi (Def) combiné à la clé secrète (Ki) associée à l'indice (i) pour générer une réponse type (R') audit défi,
• comparer la réponse (R) transmise par le terminal mobile (TM) à la réponse type (R'),
• authentifier le terminal mobile (TM) si la réponse (R) correspond à la réponse type (R').

19. Dispositif selon l'une des revendications 17 ou 18, dans lequel le serveur (S) comporte un processeur configuré pour :
- générer le tableau (TKi) associant des indices (0, 1, ..., i) à des clés secrètes (K0, K1, ..., Ki).,
- exécuter un algorithme de stéganographie (AS) permettant de cacher ledit tableau (TKi) dans un fichier média (MS),
- transférer ce fichier média (MS) vers la zone-mémoire du terminal mobile (TM).

20. Terminal mobile destiné à être utilisé pour la mise en oeuvre du procédé selon la revendication 1, ledit terminal comprenant une zone mémoire dans laquelle est enregistré un fichier média (MS) dans lequel est caché, par stéganographie, une clé secrète (Ki).

21. Terminal mobile destiné à être utilisé pour la mise en oeuvre du procédé selon la revendication 5, ledit terminal comprenant une zone mémoire dans laquelle est enregistré un fichier média (MS) dans lequel est caché, par stéganographie, un tableau (TKi) associant des indices (0, 1, ...,i) à des clés secrètes (K0, K1, ..., Ki).
